# EUROPÄISCHE PATENTANMELDUNG

(11) **EP 2 623 532 A1**
(43) Veröffentlichungstag der Anmeldung: **07.08.2013**
(21) Anmeldenummer: 13153195.6
(22) Anmeldetag: 30.01.2013
(51) Int. Cl.: C08G 18/66, C08G 18/76, C08G 18/36, C08G 18/42, C08L 75/04, C08J 5/04

(54) **Polyurethan-Kompositwerkstoff und Verfahren zur Herstellung desselben**

(30) Priorität: 31.01.2012 DE 102012201386
(71) Anmelder: Technische Fachhochschule Wildau, 15745 Wildau (DE)
(72) Erfinder: Herzog, Prof. Dr. Michael, 10179 BERLIN (DE); Stoycheva, Vesela, 15745 Wildau (DE)
(74) Vertreter: Gulde Hengelhaupt Ziebig & Schneider

(57) **Zusammenfassung**

Die Erfindung betrifft ein Verfahren zur Herstellung eines Polyurethan-Kompositwerkstoffs sowie einen nach dem Verfahren erhältlichen Polyurethan-Kompositwerkstoff. Das erfindungsgemäße Verfahren zur Herstellung eines Polyurethan-Kompositwerkstoffs umfasst die Verfahrensschritte:
a) Bereitstellen einer Mischung, die
10 bis 90 Gew.-% Polyesterdiol und
10 bis 90 Gew.-% natürliches Öl enthält;

b) Umsetzen der Mischung mit Polyisocyanat mit einer NCO-Funktionalität von f_{NCO} ≥ 2,1 bei einem Isocyanat-Index von 75 bis 150 und bei einer Temperatur von 10 bis 150°C;
c) gleichzeitig mit Schritt b), während der Durchführung des Schrittes b) einsetzend oder auf Schritt b) folgend, Verarbeiten des Umsatzprodukts mit bezogen auf das Gesamtgewicht der Mischung aus Schritt b) 5 bis 75 Gew.% cellulosebasierten Verstärkungsstoffs gegebenenfalls unter Zusatz weiterer Additive zum Polyurethan-Kompositwerkstoff, wobei ein kumulierter Anteil aus natürlichem Öl und cellulosebasiertem Verstärkungsstoff mindestens 40 Gew.% am Polyurethan-Kompositwerkstoff beträgt.

## Beschreibung

Die Erfindung betrifft ein Verfahren zur Herstellung eines Polyurethan-Kompositwerkstoffs sowie einen nach dem Verfahren erhältlichen Polyurethan-Kompositwerkstoff.

### Technologischer Hintergrund

Faserverstärkte oder partikelverstärkte Polyurethane und deren Herstellung sind bekannt und in der Fachliteratur vielfältig beschrieben. Die Komposite enthalten in der Regel Fasern auf unterschiedlicher Basis, z. B. Glasfasern, Kohlenstofffasern einschließlich CNT, Aramidfasern, Polyamidfasern. Polyesterfasern etc. Als Polyurethanmatrix werden thermoplastische Systeme in Masse, in Lösung oder durch Reaktion oder vernetzte/vernetzende Systeme auf der Basis üblicher Polyester- oder Polyetheralkohole sowie von Di- und/oder Polyisocyanaten verwendet. Die Herstellung der Verbunde erfolgt entweder durch Tränken der Fasern und der Aushärtung des Gemisches, durch Extrusion von Gemischen aus Polyurethan und Verstärkungsmitteln, durch Herstellung sogenannter Prepregs, bei denen nicht vollständig ausgehärtete Verbunde unter Druck und Temperatur unter Formgebung fertig gehärtet werden, durch pulver- oder granulatförmige Systeme, in denen die Verstärkungsmaterialien mit den Polymeren gemeinsam vorliegen und unter Formgebung in das Endprodukt überführt werden, oder durch Herstellung von Gewebe-Folien-Schichten, die unter Druck und Temperatur geformt werden.

Im Rahmen der verstärkten Nutzung von nachwachsenden Rohstoffen wurden in letzter Zeit Überlegungen darüber angestellt, diese in Polyurethanen einzusetzen. Ein Ansatz ist die Verwendung von natürlichen faserförmigen oder partikulären Verstärkungsstoffen, z. B. Hanf, Sisal, Jute, Baumwolle, partikulärer Cellulose, Holzfasern, Holzmehl etc., in Kombination mit Polyurethan-Bindemitteln. Ein weiterer Ansatz beinhaltet die Verwendung auf natürlichen Rohstoffen basierender Reaktionskomponenten, z. B. Öle oder Zucker. Außerdem sind Verfahren bekannt geworden, Di- oder Polyisocyanate auf der Basis von biologisch hergestellten Komponenten durch anschließende chemische Modifizierung herzustellen. Beispiele für die Herstellung von Reaktionskomponenten für Polyurethane umfassen:
(a) die direkte Umsetzung von natürlich vorkommenden Stoffen mit weiteren reagierenden Verbindungen oder in Gegenwart von Katalysatoren (z. B. Derivatisierung von Rizinusöl und Umsetzung der Derivate mit Isocyanaten);
(b) die Modifizierung von Naturstoffen zur Erzeugung reaktiver Gruppen (z. B. die Epoxydierung von Sojaöl, die Hydroxylierung von Kokosöl, die Propoxylierung von Zuckern);
(c) der Einsatz von Naturstoffen als Füllstoff (z. B. WPC aus Polyurethan und Holz, mikrokristalline Cellulose in Schaumstoffen, Naturfasern als Vliese, Gewebe oder Gelege); und
(d) der Einsatz von Naturstoffen als kostengünstige Verlängerer ("diluents") von Polymermatrices (z. B. Öle in Polyurethanen, wie Turbinenöl in Schuhsohlen oder Fischöl/Holzöl in Polyurethan-Sealants und -Klebstoffen).

Im Falle von (d) ist der Einsatz von maximal 25 Gew.% Öl in der Polyurethanmatrix bekannt.

Auf Leinöl-Basis hergestellte Komposite mit Montmorillonit als nanoskaligem Füllstoff werden z. B. von Sharma et al. in J. Appl. Polym. Sci. 114(1), 446-456 (2009) beschrieben. Die Verwendung von Polyolen, die durch Ringöffnung von epoxidiertem Sojaöl hergestellt werden, zur Herstellung von Polyurethan-Netzwerken beschreiben Wang et al. in J. Appl. Polym. Sci. 114(1), 125-131 (2009). Hu et al. beschreiben den Effekt unterschiedlicher Isocyanat-Indices in solchen Systemen in J. Appl. Polym. Sci. 114(10), 2577-2583 (2009). Weitere Polyurethane werden auf der Basis von modifiziertem Rapsöl hergestellt.

So werden z. B, faserverstärkte Polyisocyanat-Polyadditionsprodukte mit unvollständiger Durchtränkung der Fasermaterialien zur Erzielung besonders fehlerfreier Oberflächen in der DE 198 56 566 A1 beschrieben. Dort werden ausschließlich Polyurethansysteme sowie die Verwendung von Cellulosefasern beschrieben, jedoch nicht der Zusatz von Ölen.

Die Verwendung von Thermoplastpulver zur Herstellung von unidirektional-verstärkten Verbundwerkstoffen wird in der DE 41 21 915 A1 beschrieben, wobei das Imprägnierbad einen während des Prozesses ständig zu berechnenden Anteil an Polymer enthält. Glasfaserverstärkte Polyurethane, die zusätzlich Bindemittel für eine bessere Haftung der Fasern in der Polymermatrix enthalten, werden z. B. in DE 36 31 282 A1 beschrieben. Weiterhin wird dort der Einsatz anderer Polymere, z. B. Polyamide, Epoxydharze, PBT, PET sowie die Verwendung von Geweben, Filzen, Matten oder Vliesen beschrieben. Glasfasern werden ggf. auch mit anderen Polymeren beschichtet, siehe z. B. GB 1 456 177.

Die Verwendung von Regenerat-Cellulose zur Herstellung von Verbundwerkstoffen mit thermoplastischen Polymermatrices, wie Polypropylen, Polystyrol, Polypropylen/Polyphenylenether-Blends etc. wird z. B. in der US 7,066,532 B2 beschrieben.

In DE 10 2006 038 259 A1 werden neue Polyurethanharze und Verfahren zu ihrer Herstellung beschrieben, die die Verwendung bestimmter Polyesteralkohole als Basis haben und bedingt durch den hohen Aromatenanteil der Polyesteralkohole und der Polyisocyanate nur teilweise aushärten. In der DE 10 2007 063 442 A1 werden spezielle Polyesteralkohole mit überwiegend sekundären Hydroxylgruppen, die durch Umsetzung aromatischer Dicarbonsäuren und Diolen mit jeweils einer primären und sekundären Hydroxylgruppe erhalten werden, beschrieben. Weiterhin werden in der DE 10 2008 054 940 A1 neue Polyurethan-Vergussmassen auf der Basis dieser Polyesteralkohole und Verfahren zu ihrer Herstellung beschrieben.

### Zusammenfassung der Erfindung

Aufgabe der Erfindung ist es, einen im Lichte des Standes der Technik verbesserten Polyurethan-Kompositwerkstoff sowie ein dazugehöriges Herstellungsverfahren bereitzustellen. Insbesondere sollte ein Anteil von mindestens 40 Gew.% an nachwachsenden Rohstoffen im Polyurethan-Kompositwerkstoff erreicht werden.

Das erfindungsgemäße Verfahren zur Herstellung eines Polyurethan-Kompositwerkstoffs umfasst die Verfahrensschritte:
a) Bereitstellen einer Mischung, die
   10 bis 90 Gew.-% Polyesterdiol und
   10 bis 90 Gew.-% natürliches Öl enthält;
b) Umsetzen der Mischung mit Polyisocyanat mit einer NCO-Funktionalität von f_{NCO} ≥ 2,1 bei einem Isocyanat-Index von 75 bis 150 und bei einer Temperatur von 10 bis 150°C;
c) gleichzeitig mit Schritt b), während der Durchführung des Schrittes b) einsetzend oder auf Schritt b) folgend, Verarbeiten des Umsatzprodukts mit bezogen auf das Gesamtgewicht der Mischung aus Schritt b) 5 bis 75 Gew.% cellulosebasierten Verstärkungsstoffs gegebenenfalls unter Zusatz weiterer Additive zum Polyurethan-Kompositwerkstoff, wobei ein kumulierter Anteil aus natürlichem Öl und cellulosebasiertem Verstärkungsstoff mindestens 40 Gew.% am Polyurethan-Kompositwerkstoff beträgt.

Überraschend wurde nun gefunden, dass Polyurethansysteme mit einem hohen Anteil natürlicher Öle besonders gut zur Herstellung von Kompositen mit auf Cellulose basierenden Verstärkungsstoffen geeignet sind, was auf Grund der Hydrophilie der Cellulose und der Hydrophobie der Öle nicht zu erwarten war.

Vorzugsweise wird als Polyesterdiol ein Kondensationsprodukt aus a) aromatischen Dicarbonsäuren mit einem optionalem Zusatz von 1 bis 5 Gew.% aliphatischer Dicarbonsäuren und b) C6- bis C18-Diolen mit einer sekundären und einer primären Hydroxylgruppe sowie einer Seitenkette mit mindestens 2 Kohlenstoffatomen eingesetzt. Die Kondensation wird in der Regel in Gegenwart von metallorganischen Katalysatoren ggf. unter Abdestillieren niedermolekularer Alkohole durchgeführt. Vorzugsweise kann das Polyesterdiol auch durch Umesterung von Dimethylterephthalat mit 2-Ethly-1,3-hexandiol (zumeist in Gegenwart zinnorganischer Katalysatoren) oder durch Kondensation von Terephthalsäure und 2-Ethly-1,3-hexandiol (zumeist in Gegenwart metallorganischer Katalysatoren) erhalten werden. Die verwendeten Polyesterdiole weisen vorzugsweise eine Hydroxylzahl von 200 bis 350 mg KOH/g auf. Es liegen überwiegend sekundäre Hydroxylgruppen vor. Überraschend zeigte sich, dass hydrophobe Aromaten enthaltende Polyurethane - neben dem bereits hohen Anteil hydrophober, natürlicher Öle - dennoch zur Herstellung von Kompositen mit auf Cellulose basierenden Verstärkungsstoffen geeignet sind, was auf Grund der Hydrophilie der Cellulose nicht zu erwarten war.

Die Mischung aus Schritt a) enthält vorzugsweise 10 bis 60 Gew.%, besonders bevorzugt 20 bis 50 Gew.%, insbesondere 30 bis 45 Gew.% natürliches Öl. Vorzugsweise wird eine homogene Mischung der beiden Komponenten hergestellt.

Als natürliche Öle können alle bekannten Öle eingesetzt werden, z. B. Sojaöl, Rapsöl, Tallöl Leinöl, Kürbiskernöl, Rübsenöl, Traubenkernöl, Hanföl, Fischöl, Rizinusöl, Tungöl, usw., sowie modifizierte natürliche Öle, z. B. teilveresterte oder umgeesterte Öle sowie epoxidierte Öle.

Die Polyisocyanate weisen vorzugsweise eine NCO-Funktionalität von f_{NCO} ≥ 2,3, besonders bevorzugt f_{NCO} = 2,35 bis 3,15 auf.

Als Polyisocyanate können aromatische, cycloaliphatische, aliphatische, araliphatische oder sogenannte Prepolymere auf deren Basis verwendet werden. Insbesondere werden technische Produkte des 4,4'-Diphenylmethandiisocyanats verwendet, die unter Handelsnamen wie Lupranat M bekannt sind. Geeignet sind auch Prepolymere, die durch Umsetzung von Wasser mit Diisocyanaten zu Biuretisocyanaten, durch Umsetzung von Diol-Triol-Gemischen mit Diisocyanaten oder durch asymmetrische Trimerisierung (zu Oxadiazinen) von Diisocyanaten erhalten werden.

Eine besonders bevorzugte Verfahrensvariante sieht vor, dass ein Polyurethan aus einem Gemisch aus 25 bis 80 Gew.% Polyesterdiol und 20 bis 75 Gew.% natürlichem Öl sowie einem Polyisocyanat der NCO-Funktionalität 2,3 bis 3,1 mit 20 bis 75 Gew.% cellulosebasierten Verstärkungsstoffen geformt wird.

Der Verstärkungsstoff liegt vorzugsweise als Faser oder mikro- oder nanoskaliges Partikel vor. Insbesondere ist der Verstärkungsstoff eine Regeneratcellulose-Faser, die in Form von Einzelfasern, Gelegen, Geweben, Gewirken, Vliesen, Filzen oder Matten vorliegt. Es werden Regeneratcellulose-Fasern bevorzugt, die aus Aminoxiden gesponnen werden. Es können jedoch auch Naturfasern verwendet werden, z. B. Hanffasern, Jutefasem, Baumwollfasern etc. Fasern mit geringem Durchmesser (niedrige Dernier-Werte) und mit hoher Festigkeit werden bevorzugt. Beispielsweise können Fasern vom Typ Cordenka verwendet werden. Weiterhin können die cellulosebasierten Verstärkungsstoffe partikulär sein. Besonders bevorzugt werden mikrokristalline Cellulose und nanoskalige Celluloseprodukte, z. B. Nanowhisker, Nanofibrillen oder Nanopartikel. Im Schritt c) werden vorzugsweise 10 bis 75 Gew.%, insbesondere 20 bis 75 Gew.% cellulosebasierte Verstärkungsstoffe verarbeitet. Nach einer bevorzugten Verfahrensvariante wird Schritt b) bis zu einem Umsatzgrad von 60 bis 85 % durchgeführt. Insbesondere setzt Schritt c) ein, wenn dieser Umsatzgrad erreicht wird. Die Temperatur zur Erreichung des Umsatzgrades von 60 bis 85 % im Schritt b) beträgt dazu vorzugsweise 10 bis 70°C, insbesondere 10 bis 50°C. Gemäß dieser Verfahrensvariante erfolgt demnach zunächst eine unvollständige Kondensation der Polyurethan matrix. Das erhaltende Produkt kann anschließend pulverisiert oder granuliert werden und beispielsweise zusammen mit dem Verstärkungsstoff extrudiert, geknetet oder verpresst werden, wobei die Polymermatrix thermisch ausgehärtet wird. Alternativ werden aus unvollständig umgesetzter Polymermatrix und Verstärkungsstoff zunächst Prepregs geformt, die später unter Formgebung thermisch ausgehärtet werden.

Die Endverarbeitung des Werkstoffs ist mit Hilfe von Verfahren, wie Pressen, Extrusion, RRIM (Reaktionsspritzguss mit Verstärkungsmaterialien - "Reinforced Reaction Injection Moulding"), Kneten, Spritzguss beziehungsweise durch Herstellung von Prepregs in Form von Granulaten, Pulvern sowie einlagigen oder mehrlagigen Vorprodukten möglich. Formteile mit hohen mechanischen Eigenschaften können hergestellt werden, wobei die mechanischen Eigenschaften im Bereich der glasfaserverstärkten Epoxydharze, bei Berücksichtigung der Dichte der Komposite jedoch deutlich über diesen liegen.

Additive umfassen Zusatzstoffe, wie Katalysatoren, Flammschutzmittel, Pigmente, Farbstoffe oder spezielle Eigenschaften bewirkende Stoffe. Der Zusatz von Verträglichkeitsvermittlern oder Schlichten ist nicht erforderlich.

Weitere besonders bevorzugte Verfahrensvarianten umfassen:

Die Umsetzung in Schritt b) erfolgt bei Temperaturen von 10 bis 70°C durch Mischung mittels Handrührer, mechanischem Rührer oder einer Zwei-Komponenten-Mischmaschine und liefert ein Polyurethan mit einem Umsatzgrad von 60 bis 85%, das nach Abkühlung zu einem Pulver oder Granulat ggf. unter Kühlung vermahlen wird. Dieses Pulver oder Granulat wird mit der gewünschten Menge des cellulosebasierten Verstärkungsstoffs vermischt oder im Falle von Fasern werden diese damit belegt. Das Gemisch aus Polyurethan und cellulosebasiertem Verstärkungsstoff wird anschließend extrudiert, geknetet oder verpresst und dadurch ein Formteil mit 10 bis 75% Anteil an cellulosebasiertem Verstärkungsstoff erhalten.

Die Umsetzung in Schritt b) erfolgt bei Temperaturen von 10 bis 50°C durch Mischung mittels Handrührer, mechanischem Rührer oder einer Zwei-Komponenten-Mischmaschine und liefert ein noch flüssiges, reagierendes Polyurethan. Dieses wird auf einen cellulosebasierten flächigen Verstärkungsstoff ausgebracht und mit diesem gemeinsam vorgehärtet. Das vorgehärtete Produkt anschließend unter Formgebung in einer Presse bei Temperaturen zwischen 70 und 180°C endgültig gehärtet und entformt.

Die Umsetzung in Schritt b) erfolgt bei Temperaturen von 10 bis 50°C durch Mischung mittels Handrührer, mechanischem Rührer oder einer Zwei-Komponenten-Mischmaschine und liefert ein noch flüssiges, reagierendes Polyurethan, in das während der andauernden Polymerbildung ein oder mehrere, unterschiedlich geformte und ggf. unterschiedlich große cellulosebasierte Verstärkungsstoffe eingeführt und mit diesen gemeinsam unter Formgebung oder Granulierung vorgehärtet werden. Diese Prepregs werden später unter bei Temperaturen von 70 bis 180°C und bei einem Druck von 1 bis 100 bar unter Formgebung in einer Presse endgültig gehärtet und entformt.

Die Umsetzung in Schritt b) erfolgt bei Temperaturen von 10 bis 50°C durch Mischung mittels Handrührer, mechanischem Rührer oder einer Zwei-Komponenten-Mischmaschine und liefert ein noch flüssiges, reagierendes Polyurethan, in dessen reagierenden Gemischstrahl 1 bis 50 Gew.% nanoskalige cellulosebasierte Verstärkungsstoffe eingeführt werden. Diese werden gemeinsam in Form von Granulaten oder Folien vorgehärtet und die vorgehärteten Granulate oder Folien zu einem späteren Zeitpunkt unter Formgebung in einer Presse endgültig gehärtet und entformt.

Durch das erfindungsgemäße Verfahren werden Komposite mit einem hohen Anteil an cellulosebasiertem Verstärkungsstoff und natürlichem Öl bereitgestellt. Der Anteil nachwachsender Rohstoffe in den Kompositen liegt deutlich über den derzeit maximal erhältlichen Anteilen. Ein weiterer Aspekt der Erfindung liegt daher in der Bereitstellung eines Polyurethan-Kompositwerkstoffs, der gemäß dem beschriebenen Verfahren herstellbar ist. Die mechanischen Eigenschaften der Komposite wurden folgendermaßen bestimmt: Zugfestigkeit zwischen 100 und 500 MPa, Bruchdehnung bei 1,5 bis 5,0 %, E-Modul zwischen 3 und 100 GPa. Zum Vergleich seien Verbunde aus Polyamid 66 mit 3 % CNT (Kohlenstoff-Nanofasern) genannt: Zugfestigkeit 69 MPa, Bruchdehnung 2%, E-Modul 3466 MPa (Reinforcing Polymers, Latest Advances of selected Fillers, M. Biron, SpecialChem vom 13.12.2010). Damit weisen die erfindungsgemäßen Komposite wesentlich höhere mechanische Festigkeiten als gegenwärtige Hochleistungsmaterialien oder zum Vergleich hergestellte Epoxydharz-Glasfaser-Komposite auf.

Vorteile der erfindungsgemäßen Komposite und der zu ihrer Herstellung genutzten Komponenten sind darüber hinaus die vielfältigen Methoden der Herstellung und die niedrige Viskosität der Komponenten, was eine optimale Durchdringung und damit geringe Lunker-oder Blasenbildung bedeutet sowie sehr gute glatte Oberflächen zu erhalten gestattet. Die Verarbeitung des erfindungsgemäßen Polyurethan-Kompositwerkstoffs mit hohem Anteil nachwachsender Rohstoffe kann prinzipiell in gleicher Weise erfolgen, wie weiter oben für herkömmliche faserverstärkte und partikelverstärkte Polyurethane beschrieben.

### Detaillierte Beschreibung der Erfindung

Die Erfindung wird nachfolgend anhand von Beispielen näher erläutert.

### Ausführungsbeispiel 1

### a) Herstellung des Polyesteralkohols

Es wird ein aromatischer Polyesteralkohol, im weiteren als PEA1 bezeichnet, durch Umesterung von Dimethylterephthalat mit 2-Ethy1-1,3-hexandiol hergestellt. Dazu werden 2,96 kg 2-Ethyl-1,3-hexandiol in einen 6 I-Sulfierkolben gegeben, unter Stickstoff und Rühren wird die Temperatur auf 150°C gesteigert und während der Erwärmung 0,15 g Zinndioctoat hinzugefügt. Sobald die Temperatur von 150°C erreicht ist, werden portionsweise 1,95 kg Dimethylterephthalat zugegeben, wobei die Temperatur nicht 135°C unterschreitet. Innerhalb von 135 Minuten werden 626 g Methanol abdestilliert. Man erhält ein hellgelbes, klares Produkt mit überwiegend sekundären Hydroxylgruppen, der Hydroxylzahl von 268 mg KOH/g, der Säurezahl von 1,6 mg KOH/g sowie einer Viskosität von 9100 mPas (25°C).

### b) Herstellung der Polyesteralkohol-Öl-Mischung

Aus 60 Gew.-% PEA1 und 40 Gew.-% Sojaöl wird eine homogene, klare Mischung mit der Hydroxylzahl 232 mg KOH/g, der Säurezahl 4,0 mg KOH/g und der Viskosität von 1200 mPas bei 25°C hergestellt.

### c) Herstellung des Polyurethans

500 g der Polyesteralkohol-Öl-Mischung werden in einem PE-Behälter mit 290 g polymerem 4,4'-Diphenylmethandiisocyanat (Lupranat M20S der BASF SE) versetzt. Das Gemisch wird 5 Minuten mit einem Metallmischer bei 500 min⁻¹ gerührt. Das reagierende Gemisch wird in zwei gleiche Teile geteilt. Ein Anteil wird auf Cordenka-Gewebe von 120 g/m² derart gegeben, dass ein Fasergewichtsanteil von ca. 50 % erhalten wird. Das Komposit wird bei Zimmertemperatur vorgehärtet. Der zweite Anteil wird auf ein Blech gegossen und ebenfalls bei Zimmertemperatur vorgehärtet.

### d) Herstellung der Komposite

Eine Fläche von 25 x 25 cm des aus Cordenka-Gewebe hergestellten vorgehärteten Komposits (Aushärtungsgrad mittels FTIR 78%) wird in eine Pressform gelegt und bei 5 bar und 120°C 15 Minuten verpresst. Man erhält ein ausgehärtetes Komposit (Aushärtungsgrad 98% mittels FTIR) mit folgenden Eigenschaften:
Faservolumenanteil: 37,5 %
Fasergewicht: 45 %
Zugfestigkeit: 291 MPa
Bruchdehnung: 2 %
E-Modul: 17825 MPa

Eine Fläche von 25 x 25 cm Cordenka -Gewebe (7,5 g) in einer Pressform wird mit 9,75 g des Polyurethan-Pulvers (c, Anteil 2) bestreut. Anschließend wird 20 Minuten bei 120°C und 5 bar gepresst. Nach dem Abkühlen wird ein Komposit als ein klares Flächengebilde mit folgenden Eigenschaften erhalten:
Faservolumenanteil: 43,5 %
Fasergewicht: 49 %
Zugfestigkeit: 146 MPa
Bruchdehnung: 2,7 %
E-Modul: 10300 MPa

### Ausführungsbeispiel 2

### a) Herstellung des Polyesteralkohols

Es wird ein aromatischer Polyesteralkohol, im weiteren als PEA2 bezeichnet, durch Umesterung von Dimethylterephthalat mit 2-Ethyl-1,3-hexandiol hergestellt. Dazu werden 6,0 kg 2-Ethyl-1,3-hexandiol in einen 12 I-Reaktor mit Ölheizung, Begasung, Ankerrührer und Temperaturkontrolle gegeben, die Temperatur unter Rühren und Stickstoffschleier auf 150°C gesteigert und während der Erwärmung 0,25 g Zinndioctoat hinzugefügt. Sobald die Temperatur von 150°C erreicht ist, werden portionsweise 3,9 kg Dimethylterephthalat zugegeben, ohne dass die Temperatur 135°C unterschreitet. Innerhalb von 180 Minuten werden 626 g Methanol abdestilliert. Man erhält ein heilgelbes, klares Produkt mit überwiegend sekundären Hydroxylgruppen, der Hydroxylzahl von 237 mg KOH/g, der Säurezahl von 1,1 mg KOH/g sowie einer Viskosität von 10500 mPas (25°C).

### b) Herstellung der Polyesteralkohol-Öl-Mischung

Aus 50 Gew.-% PEA2 und 50 Gew,-% Rapsöl wird eine homogene, klare Mischung mit der Hydroxylzahl 198 mg KOH/g, der Säurezahl 2,6 mg KOH/g und der Viskosität von 1100 mPas bei 25°C hergestellt.

### c) Herstellung des Polyurethans

500 g der Polyesteralkohol-Öl-Mischung werden in einem PE-Behälter mit 238 g polymerem 4,4'-Diphenylmethandiisocyanat (Lupranat M20S der BASF SE) versetzt. Das Gemisch wird 5 Minuten mit einem Metallmischer bei 500 min⁻¹ gerührt. Das reagierende Gemisch wird in zwei gleiche Teile geteilt. Ein Anteil wird auf Cordenka-Gewebe (ein Cellulose-Gewebe der Firma Cordenka) von 120 g/m² derart gegeben, das ein Fasergewichtsanteil von ca. 50 % erhalten wird. Das Komposit wird bei Zimmertemperatur vorgehärtet. Der zweite Anteil wird mit Cellulose-Nanowhiskern in einem Kneter bei 100°C geknetet, bis keine weitere Erhöhung des Drehmoments festgestellt wird. Der Umsatzgrad wird mit 76 % mittels FTIR bestimmt. Der Kneterinhalt wird abgekühlt und mittels Stiftmühle auf eine Korngröße von 4 mm vermahlen.

### d) Herstellung der Komposite

Eine Fläche von 25 x 25 cm des aus Cordenka-Gewebe hergestellten vorgehärteten Komposits (Aushärtungsgrad mittels FTIR 78%) wird in eine Pressform gelegt und bei 5 bar und 120°C 15 Minuten verpresst, Man erhält ein ausgehärtetes Komposit (Aushärtungsgrad 98% mittels FTIR) mit folgenden Eigenschaften:
Faservolumenanteil: 45 %
Fasergewicht: 55 %
Zugfestigkeit: 145 MPa
Bruchdehnung: 4,0 %
E-Modul: 9228 MPa

Von dem unter c), 2. Anteil, hergestellten Granulat werden 250 g in eine Pressform von 25 x 25 cm gegeben. Das Gemisch wird auf 120°C erwärmt und danach bei 10 bar 20 Minuten verpresst. Anschließend wird abgekühlt und eine 4 mm starke Platte entnommen. Diese hat bei einem Umsatzgrad von 98,5% folgende Eigenschaften:
Faservolumenanteil: 38 %
Fasergewicht: 41 %
Zugfestigkeit: 366 MPa
Bruchdehnung: 2,2 %
E-Modul: 20027 MPa

## Patentansprüche

1. Verfahren zur Herstellung eines Polyurethan-Kompositwerkstoffs, umfassend die Verfahrensschritte:
a) Bereitstellen einer Mischung, die
10 bis 90 Gew.-% Polyesterdiol und
10 bis 90 Gew.-% natürliches Öl enthält;
b) Umsetzen der Mischung mit Polyisocyanat mit einer NCO-Funktionalität von f_{NCO} ≥ 2,1 bei einem Isocyanat-Index von 75 bis 150 und bei einer Temperatur von 10 bis 150°C;
c) gleichzeitig mit Schritt b), während der Durchführung des Schrittes b) einsetzend oder auf Schritt b) folgend, Verarbeiten des Umsatzprodukts mit bezogen auf das Gesamtgewicht der Mischung aus Schritt b) 5 bis 75 Gew.% cellulosebasierten Verstärkungsstoffs gegebenenfalls unter Zusatz weiterer Additive zum Polyurethan-Kompositwerkstoff, wobei ein kumulierter Anteil aus natürlichem Öl und cellulosebasiertem Verstärkungsstoff mindestens 40 Gew.% am Polyurethan-Kompositwerkstoff beträgt.

2. Verfahren nach Anspruch 1, bei dem als Polyesterdiol ein Kondensationsprodukt aus a) aromatischen Dicarbonsäuren mit einem optionalem Zusatz von 1 bis 5 Gew.% aliphatischer Dicarbonsäuren und b) C6- bis C18-Diolen mit einer sekundären und einer primären Hydroxylgruppe sowie einer Seitenkette mit mindestens 2 Kohlenstoffatomen eingesetzt wird.

3. Verfahren nach Anspruch 1, bei dem das Polyesterdiol durch Umesterung von Dimethylterephthalat mit 2-Ethly-1,3-hexandlol oder durch Kondensation von Terephthalsäure und 2-Ethly-1,3-hexandiol erhalten wird.

4. Verfahren nach einem der vorhergehenden Ansprüche, bei dem das Polyesterdiol eine Hydroxylzahl von 200 bis 350 mg KOH/g aufweist.

5. Verfahren nach einem der vorhergehenden Ansprüche, bei dem die Mischung aus Schritt a) 10 bis 60 Gew.%, vorzugsweise 20 bis 50 Gew.%, besonders bevorzugt 30 bis 45 Gew.% natürliches Öl enthält.

6. Verfahren nach einem der vorhergehenden Ansprüche, bei dem die Polyisocyanate eine NCO-Funktionalität von f_{NCO} ≥ 2,3, bevorzugt f_{NCO} = 2,35 bis 3,15 aufweisen.

7. Verfahren nach einem der vorhergehenden Ansprüche, bei dem der Verstärkungsstoff als Faser oder mikro- oder nanoskaliges Partikel vorliegt.

8. Verfahren nach Anspruch 7, bei dem der Verstärkungsstoff Regeneratcellulose-Fasern sind, die in Form von Einzelfasern, Gelegen, Geweben, Gewirken, Vliesen, Filzen oder Matten vorliegen.

9. Verfahren nach Anspruch 7, bei dem der Verstärkungsstoff Cellulose-Nanowhisker oder Cellulose-Nanofibrillen sind.

10. Verfahren nach einem der vorhergehenden Ansprüche, bei dem im Schritt c) 10 bis 75 Gew.%, insbesondere 20 bis 75 Gew.% cellulosebasierte Verstärkungsstoffe verarbeitet werden.

11. Verfahren nach einem der vorhergehenden Ansprüche, bei dem Schritt b) bis zu einem Umsatzgrad von 60 bis 85 % durchgeführt wird.

12. Verfahren nach Anspruch 11, bei dem Schritt c) einsetzt, wenn ein Umsatzgrad von 60 bis 85 % im Schritt b) erreicht wird.

13. Verfahren nach Anspruch 11 oder 12, bei dem die Temperatur zur Erreichung eines Umsatzgrades von 60 bis 85 % im Schritt b) 10 bis 70°C, insbesondere 10 bis 50°C beträgt.

14. Polyurethan-Kompositwerkstoff hergestellt nach einem Verfahren gemäß der vorhergehenden Ansprüche.
